# EUROPÄISCHE PATENTANMELDUNG

(11) **EP 1 564 692 A2**
(43) Veröffentlichungstag der Anmeldung: **17.08.2005**
(21) Anmeldenummer: 05001259.0
(22) Anmeldetag: 21.01.2005
(51) Int. Cl.: G07D 11/00, G07F 19/00

(54) **System zur Bargeldhandhabung**

(30) Priorität: 10.02.2004 DE 102004006532
(71) Anmelder: Giesecke & Devrient GmbH, 81677 München (DE)
(72) Erfinder: Gessler, Hermann, 82229 Seefeld (DE)

(57) **Zusammenfassung**

Die Erfindung betrifft ein System zur Bearbeitung von Aufträgen zur Bargeldhandhabung, wobei eine Zentrale mittels eines Zentralcomputers über Datenleitungen Daten mit verschiedenen Institutionen austauschen kann, insbesondere mit einer oder mehreren Geschäftsbanken, einer oder mehreren Zentralbanken und einem oder mehreren Cash Centern, und wobei der Zentralcomputer in Abhängigkeit von kundenspezifischen Auftragsdaten Bearbeitungsdaten erzeugt, welche an zumindest einen Teil der Institutionen über die Datenleitungen zur Bearbeitung des Kundenauftrags weitergeleitet werden. Dieses System ermöglicht eine effektive automatisierte Bearbeitung von verschiedensten Vorgängen bei der Bargeldhandhabung im Geldkreislauf.

## Beschreibung

Die Erfindung betrifft ein System zur Handhabung von Bargeld, wie Banknoten oder Münzen.

Im Folgenden wird insbesondere auf die Problematik der Handhabung von Banknoten eingegangen. Es gibt verschiedene Institutionen, die Banknoten in größeren Mengen handhaben. Dies sind zum einem die im Staatsauftrag handelnden Zentralbanken, die üblicherweise für die Herstellung und Ausgabe von neuen Banknoten, die Prüfung von bereits in Umlauf gewesenen Banknoten und die Vernichtung von als nicht mehr umlauffähig geprüften Banknoten zuständig sind. Zur Prüfung werden dabei üblicherweise Banknotensortiervorrichtungen verwendet, in denen die Banknoten mit hoher Geschwindigkeit und Genauigkeit auf Echtheit und Umlauffähigkeit geprüft werden. Eine weitere Institution sind die kommerziellen Geschäftsbanken. Diese zahlen Bargeld an ihre Geschäfts- oder Privatkunden aus oder nehmen Bargeld von diesen an, um es auf deren Konten gutzuschreiben. Zum Teil werden hierbei zur Ein- und/oder Auszahlung Geldautomaten verwendet. Weiterhin gibt es sogenannte Cash Center, die im Auftrag von Zentralbanken oder Geschäftsbanken eine Prüfung und Konfektionierung von angelieferten Bargeldbeständen durchführen. Werttransportunternehmen sind dabei für den Transport der Bargeldbestände zwischen den einzelnen Institutionen zuständig. Zudem werden von den Geschäftsbanken vermehrt selbständige Serviceunternehmen mit der technischen Wartung von deren Geldautomaten beauftragt.

Um die Arbeitsprozesse in den verschiedenen Bereichen des Geldkreislaufes zu vereinfachen, setzten die meisten Institutionen mittlerweile Softwarelösungen ein, um ihre Arbeitsabläufe zu automatisieren. Den Bereich der Geldautomatenbefüllung betreffend sind solche Lösung beispielsweise in der WO 00/26873 A1 oder der WO01/97129 A1 beschrieben. Hiernach werden einer Informationszentrale Daten von den einzelnen Geldautomaten zugeführt, die dazu verwendet werden, rechtzeitig die Automaten entleeren bzw. mit neuem Geld füllen zu können.

Beispielsweise aus der EP 0 653 717 B1 ist weiterhin bekannt, daß ein Zentralrechner über eine Datenleitung mit mehreren Geldautomaten zur Übermittlung von Transaktionsdaten verbunden sein kann. Der Zentralrechner dient beispielsweise dazu, einen Kontenabgleich zu den an den Geldautomaten ein- bzw. ausgezahlten Beträgen durchzuführen.

Allerdings haben diese Systeme den Nachteil, daß sie lediglich einzelne Aspekte der Bargeldhandhabung vereinfachen.

Davon ausgehend ist es die Aufgabe der vorliegenden Erfindung, ein System zur Bargeldhandhabung bereitzustellen, das eine effektivere Bargeldhandhabung erlaubt.

Diese Aufgabe wird durch das System nach Anspruch 1 und den zugehörigen Datenträger nach Anspruch 16 gelöst. Die abhängigen Ansprüche beschreiben bevorzugte Ausgestaltungen.

Die Erfindung basiert somit auf der Idee, eine zentrale Instanz zu installieren, die in Datenkommunikation mit allen relevanten Institutionen des Geldkreis, d.h. insbesondere mit Geschäftsbanken, Zentralbanken und Cash Centern treten und zur Bearbeitung von Kundenaufträgen automatisch Bearbeitungsdaten erzeugen und an die betreffenden Institutionen weiterleiten kann. Indem die Zentrale mit allen genannten Institutionen verbunden ist, können die meisten üblicherweise auftretenden Aufträge zur Handhabung größerer Bargeldbestände halb- oder vollautomatisiert durchgeführt werden. Das erfindungsgemäße System ermöglicht es hierdurch, nicht nur eine Geldautomatenbefüllung und -entleerung, sondern auch andere Bargeldhandhabungsvorgäbe im Geldkreislauf, wie den Transport von Bargeld zwischen Geschäftsbanken, Cash Centern und Zentralbanken effizient durchzuführen.

Dies ist ein wesentlicher Vorteil im Gegensatz zu den bisher bekannten computergestützten Systemen z.B. nach WO 00/26873 A1 oder WOO1/97129 A1, die jeweils nur einzelne Aspekte dieses Geldkreislaufs abdecken.

Besonders bevorzugt wird dabei ein Zentralcomputer der Zentrale, d.h. vor-, zugsweise die auf dem Zentralcomputer laufende Software, zumindest einen Teil oder alle der folgenden Module aufweist: ein Auftragserfassungsmodul für die Erfassung und Speicherung von Auftragsdaten des Kundenauftrags, ein Berechnungsmodul zur Berechnung von Bearbeitungsdaten auf der Grundlage der Auftragsdaten und zur Zuordnung von Bearbeitungsdaten zu zumindest einem Teil der Institutionen, ein Datenübertragungsmodul zur Übertragung von Daten wie Bearbeitungsdaten zu den zugeordneten Institutionen, ein Rückmeldungsdatenerfassungsmodul zur Erfassung von in Bezug auf die Auftragsdaten und/oder Bearbeitungsdaten stehenden Rückmeldungsdaten, die von den Institutionen dem Zentralcomputer übermittelt werden, ein Überwachungsmodul zur Überprüfung der Plausibilität von Auftragsdaten und/oder Bearbeitungsdaten und/oder Rückmeldungsdaten, ein Abrechnungsmodul zur Erzeugung von den Kunden zugeordneten Rechnungsdaten und/oder Buchungsdaten, die auf der Grundlage der Auftragsdaten, Bearbeitungsdaten und/oder Rückmeldungsdaten gewonnen werden.

Die Bereitstellung all dieser Module ermöglicht es, die Auftragsbearbeitung automatisiert durchzuführen, zu überwachen und abzurechnen.

Weiterhin wird die Aufgabe durch einen Datenträger mit einer Software gelöst, die zur Realisierung des erfindungsgemäßen Systems ausgestaltet ist.

Die auf dem Datenträger befindliche Software wird insbesondere auch die vorstehend genannten Module, d.h. Auftragserfassungsmodul, Berechnungsmodul, Datenübertragungsmodul, Rückmeldungsdatenerfassungsmodul, Überwachungsmodul und/oder Abrechnungsmodul aufweisen.

Es sei betont, daß die Merkmale der abhängigen Ansprüche und der in der nachstehenden Beschreibung genannten Ausführungsbeispiele in Kombination oder auch unabhängig voneinander und vom Gegenstand der Hauptansprüche weitere Grundgedanken beschreiben und vorteilhaft verwendet werden können, z.B. auch dann, wenn nicht alle der relevanten Institutionen des Geldkreis, d.h. insbesondere mit Geschäftsbanken, Zentralbanken und Cash Centern und die Zentrale miteinander verbunden sind.

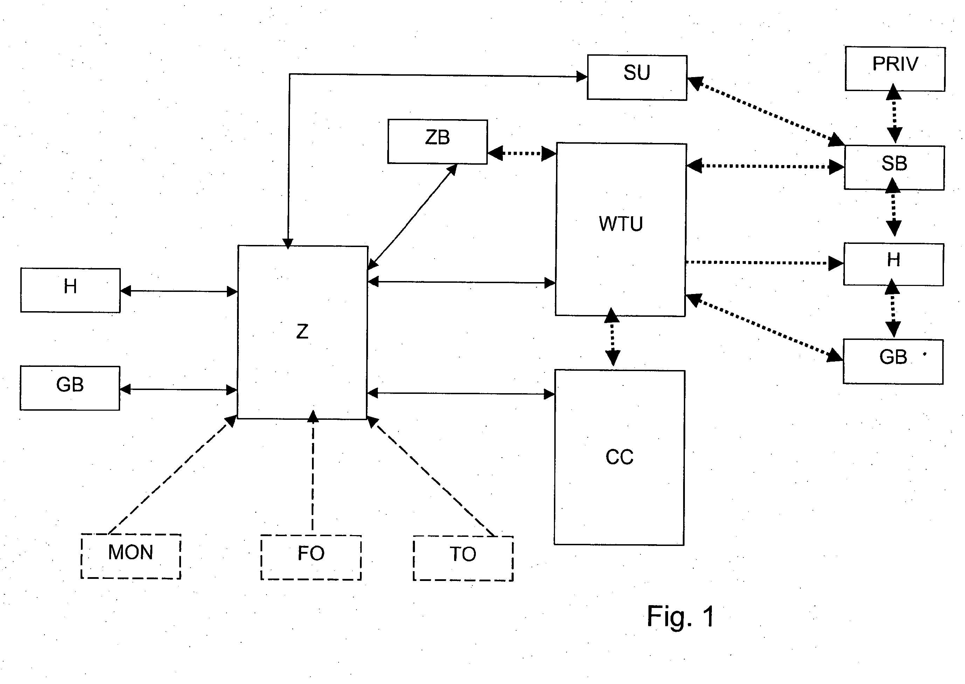

Weitere Vorteile der vorliegenden Erfindung werden nachfolgend anhand der einzigen beigefügten Zeichnung näher erläutert werden. Die Figur zeigt dabei in schematischer Weise den durch durchgezogene Linien veranschaulichten Datentransfer und den durch gepunktet gezeichnete Linien veranschaulichten Bargeldtransport zwischen verschiedenen durch Kästen symbolisierten Institutionen des Geldkreislaufs in einem erfindungsgemäßen System zur Bargeldhandhabung nach einem ersten Ausführungsbeispiel.

Sinn des erfindungsgemäßen Systems zur Bargeldhandhabung ist es, eine zentrale Auftragsbearbeitung von den meisten im Geldkreislauf üblichen Prozessen zur Bargeldhandhabung bereitzustellen. Eine wesentliche Einheit des erfindungsgemäßen Systems zur Bargeldhandhabung, das in der einzigen Figur schematisch veranschaulicht ist, ist hierzu die Zentrale Z. In der Zentrale Z wird dabei ein Zentralcomputer verwendet, welcher aus einem oder mehreren miteinander vernetzten Computermodulen bestehen kann und Schnittstellen aufweist, um automatisch Daten mit anderen Institutionen des Geldkreislaufs auszutauschen. Dies sind insbesondere Filialen von Geschäftsbanken GB, Zentralbanken ZB, Werttransportunternehmen WTU, Cash Center CC und Serviceunternehmen SU für die Wartung und für sonstige Serviceleistungen an Geldautomaten SB. Es kann allerdings auch vorgesehen sein, daß die Zentrale Z z.B. ein Bestandteil des Cash Centers CC ist.

Als Datenleitungen zwischen diesen einzelnen Institutionen, die in der Figur symbolisch durch durchgezogene Linien veranschaulicht sind, werden vorzugsweise standardisierte Schnittstellen verwendet, wie z. B. Internet- oder email-, DFÜ- (d.h. Datenfernübertragungs-), SMS- oder Fax- basierte Verbindungen. Besonders bevorzugt werden dabei solche Datenleitungen, wie Internet- oder DFÜ- Verbindungen eingesetzt, die einen vollautomatischen Datentransfer zwischen dem Zentralcomputer und einem durch die Datenleitung verbundenen Computer der Institutionen erlauben.

Der Zentralcomputer bzw. die darauf installierte Software ist insbesondere dazu in der Lage, mehrere Aufträge auch von unterschiedlichen Kunden zu erfassen, automatisiert entsprechende Bearbeitungsdaten zur Durchführung dieser Aufträge zu erzeugen, die zugehörigen Informationen an alle über Datenleitungen angeschlossenen Institutionen weiterzuleiten und durch Rückmeldung dieser Institutionen die ordnungsgemäße Durchführung der Aufträge zu überwachen. Zudem wird automatisch eine Abrechnung mit den einzelnen beteiligten Institutionen über deren Dienstleistungen bei der Auftragsbearbeitung und eine Erstellung von Rechnungsdaten und/oder Buchungssätzen für den Kunden durchgeführt werden, wobei die Rechnungen bzw. Buchungen auf der Grundlage der Auftragsdaten, Berechnungsdaten und der zurückgemeldeten Daten der mit der Ausführungsdurchführung beauftragten Institutionen erstellt werden. Indem erfindungsgemäß eine zentrale Stelle Z zur Koordinierung der genannten Vorgänge geschaffen wird, ist eine automatisierte und standardisierte Lösung bereitgestellt, um ein zentrale Bargeldlogistik realisieren zu können.

Im Detail können typische Prozesse der Auftragsbearbeitung nach dem erfindungsgemäßen System zur Bargeldhandhabung folgendermaßen ausgestaltet sein.

### 1. Arten von Aufträgen:

Es gibt unterschiedliche Arten von Aufträgen, welche die Handhabung von Bargeld betreffen und durch die Zentrale Z bearbeitet werden können. Dies können z. B. Aufträge zur Bargeldversorgung oder - entsorgung sein, d. h. Aufträge von Geschäftsbanken GB oder Großhändlern H, gewisse Bargeldbestände bei diesen Kunden zu bestimmten Terminen anzuliefern bzw. abzuholen.

So kann ein Händler H oder eine Filiale einer Geschäftsbank GB beispielsweise bei der Zentrale Z eine Bestellung aufgeben, die Tagesbestände an Geld abzuholen oder Wechselgeld für den nächsten Tag angeliefert zu bekommen.

Weiterhin können es Dienstleistungen, wie Aufträge von Geschäftsbanken GB sein, daß deren Geldautomaten SB, die Privatpersonen PP zur Auszahlung und/oder Einzahlung von Bargeld verwenden, durch ein Werttransportunternehmen WTU zu gewissen Zeiten befüllt und entleert oder Wartungsleistungen an solchen Geldautomaten SB durch Serviceunternehmen SU durchgeführt werden.

### 2. Auftragsdatenerfassung:

Diese Auftragsdaten werden vom Kunden, wie z. B. einer Filiale einer Geschäftsbank GB, einem Auftragserfassungsmodul des Zentralcomputers der Zentrale Z vorzugsweise über eine standardisierte Schnittstellen übermittelt: Nach einer unabhängigen Idee der vorliegenden Erfindung wird das System der Zentrale Z so ausgestaltet sein, daß der Kunde GB über unterschiedliche Schnittstellen, wie z. B. sowohl eine Internet- als auch ein Faxverbindung oder eine andere kundenspezifische Schnittstelle, die Daten dem Zentralcomputer der Zentrale Z übersenden kann.

Im Falle einer Auftragsübermittlung des Kunden an die Zentrale Z per Fax beispielsweise kann vorgesehen sein, daß das Fax mit Hilfe eines OCR (Optical Character Recognition) Lesers gescannt und die relevanten Auftragsdaten automatisch extrahiert und in elektronischer Form dem Zentralcomputer zugeführt werden. Gegebenenfalls können durch eine Bedienperson in der Zentrale Z auch notwendige Korrekturen bei nicht erfolgreicher OCR-Lesung durchgeführt werden.

Bevorzugt sind dabei Datenübertragungsverfahren, die eine vollautomatische Erfassung der Auftragsdaten in der Software des Zentralcomputers der Zentrale Z ohne Zwischenschaltung von manuellen Tätigkeiten erlauben, wie z.B. eine Auftragsdatenübermittlung mittels Internet oder einer DFÜ-Verbindung. Die Auftragsübersendung kann z. B. bei Verwendung des Internets mit Hilfe von HTML-Formularen oder dergleichen durchgeführt werden, bei denen der autorisierte Kunde in vorgefertigte elektronische Formulare seine Auftragsdaten eingeben kann.

Es ist auch möglich, daß Auftragsdaten auf der Grundlage von Kundenvorgaben automatisch durch das Auftragserfassungsmodul generiert werden. So können z.B. periodische Wartungsaufträge erzeugt werden, die an ein Serviceunternehmen SU übermittelt werden, damit dieses Wartungsarbeiten (Reparaturen, Auffüllen von Druckerpapier und Druckertinte usw.) von Geldautomaten SB nach einer Betriebsperiode durchführen, die gegebenenfalls für den Geldautomaten SB spezifisch festgelegt ist.

### 3. Auftragsdatenüberprüfung:

Bei einer Auftragsdatenübermittlung kann ein Mechanismus zur Authentisierung vorgesehen sein. Dies kann z. B. durch eine verschlüsselte Datenübertragung erfolgen, bei der nur der jeweilige Kunde einen spezifischen digitalen Schlüssel zur Datenübertragung zur Verfügung hat, der nicht autorisierten dritten Personen nicht zur Verfügung steht. Hierdurch kann sichergestellt werden, daß nur berechtigte Kunden Aufträge an die Zentrale Z schicken können.

Im Fall einer Auftragsübermittlung per FAX kann beispielsweise auch eine Liste der bestellberechtigten Personen eines Kunden vorhanden sein und ein automatischer Vergleich der in elektronischer Form durch eine Bilderkennungssoftware erfaßten Faxunterschrift mit den gespeicherten Unterschriftenproben durchgeführt werden, um die Berechtigung zur Bestellung zu verifizieren.

Diese Prüfungen werden in einem Überwachungsmodul des Zentralcomputers Z durchgeführt werden, das z.B. weiterhin die Auftragsdaten auf logische Konsistenz, die Bonität des Kunden usw. prüft. Im Speziellen kann z. B. die Kundenstruktur geprüft werden, indem kontrolliert wird, ob ein Kunde bereits in einer Kundenstammdatenverwaltung enthalten ist, d. h. auch ob diese vollständig ist oder nicht. Zudem kann geprüft werden, daß keine Datensätze doppelt angelegt werden, weil z. B. dieselben Auftragsdaten sowohl per Internet, als auch per Fax der Zentrale zugesendet worden sind.

Nachdem z.B. auf die genannten Arten die Auftragsdaten elektronisch im Zentralcomputer erfaßt worden sind, wird der Kunde vorteilhafterweise mittels eines Datenübertragungsmoduls eine Auftragsbestätigung oder gegebenenfalls eine Ablehnung des Auftrags, z.B. bei im Überwachungsmodul erkannten Unstimmigkeiten, zugesendet bekommen. Diese Information kann über den gleichen oder eine andere Datenleitung übermittelt werden. Alternativ oder zusätzlich kann die Möglichkeit gegeben sein, daß der Kunde jederzeit über eine der vorhandenen Datenleitungen, wie z.B. die Internetverbindung den aktuellen Status seines Auftrags abfragen kann.

### 4. Bearbeitungsdatenerzeugung:

Ausgehend von den gespeicherten Auftragsdaten werden in einem Berechnungsmodul des Zentralcomputers automatisch Bearbeitungsdaten erzeugt, welche an zumindest einen Teil der angeschlossenen Institutionen automatisch weitergeleitet werden, um die eingegangenen Aufträge bearbeiten zu lassen.

Im Fall einer Bestellung von Bargeldbeständen einer Filiale einer Geschäftsbank GB werden beispielsweise Bearbeitungsdaten generiert, die angeben, welche Bargeldbestände welches Werttransportunternehmen WTU wann an die von dem Kunden spezifizierte Filiale liefern muß. Die Wahl der dabei ausgewählten Institutionen, an welche die Bearbeitungsdaten zur Durchführung der Aufträge weitergeleitet werden, kann dabei von Kriterien, wie kundenspezifischen Wahlkriterien, der Art von vorherigen Auftragsdaten usw. abhängen. So kann auch eine Verknüpfung zwischen den Standorten der Niederlassungen der Werttransportunternehmen WTU und den Standorten der Kunden verwendet werden, um eine automatische Verteilung der Aufträge auf die einzelnen angeschlossenen Institutionen zu generieren, die möglichst geringe Transportwege verursacht.

Das Berechnungsmodul kann dabei auch mehrere Aufträge auch unterschiedlicher Kunden gleichzeitig bündeln und hieraus gemeinsame Bearbeitungsdaten erzeugen, die den Institutionen zugeleitet werden. Vorzugsweise wird somit eine Generierung der Bearbeitungsdaten in Abhängigkeit von mehreren Auftragsdaten erfolgen, um z. B. eine geeignete Verteilung der Aufträge an die einzelnen von mehreren Cash Centern oder WTUs usw. zu ermitteln.

Wie in der Figur durch die gestrichelt dargestellten Kästen symbolisch veranschaulicht ist, kann der Zentralcomputer der Zentrale Z sowohl zur Erzeugung von Auftragsdaten, als auch insbesondere zur Erzeugung von Bearbeitungsdaten auf Ergebnisse anderer Softwareprogramme zurückgreifen.

Dies kann z. B. eine Überwachungssoftware MON für Geldautomaten SB sein, welche Füll- oder Zustandsdaten von Geldautomaten SB der Kunden zur Verfügung stellt, eine Vorhersagesoftware FO, die aufgrund vorheriger Erfahrungsdaten beispielsweise Berechnungen durchführt, welche Bargeldbestände in welchen Cash Centern CC, Geschäftsbanken GB oder Geldautomaten SB in Zukunft zu erwarten sind, oder eine Tourenplanungssoftware TS, welche für die Werttransportunternehmen WTU eine geeignete Routenplanung in Abhängigkeit von den früher erzeugten und/oder zu erzeugenden Bearbeitungsdaten durchführt.

Im Fall, daß ein Händler H als Kunde beispielsweise die Abholung der Tageseinnahmen bei einem Cash Center CC in Auftrag gibt, welches als Zentrale Z fungiert, werden im Zentralcomputer z.B. Daten generiert, welche einem Werttransportunternehmen WTU übermittelt werden, um dieses zu beauftragen, die Tageseinnahmen beim Kunden H abzuholen und zu dem Cash Center CC oder direkt zur Zentralbank ZB zur Überprüfung des Werts und der Echtheit der Banknoten der Tageseinnahmen zukommen zu lassen.

### 5. Bearbeitungsdatenübermittlung:

Die so generierten Bearbeitungsdaten werden dann vorzugsweise mittels eMail oder Internet der jeweiligen Institution, wie z. B. im genannten Fall einem speziellen der möglichen Werttransportunternehmen WTU zugeleitet. Die Institutionen, die Bearbeitungsdaten erhalten haben, bestätigen üblicherweise die Annahme der Bearbeitung gemäß der zugeführten Bearbeitungsdaten. Diese Daten werden in einem Datenerfassungsmodul erfaßt und im Überwachungsmodul auf Plausibilität hin geprüft.

### 6. Abrechnungsdatenerzeugung:

Eine Besonderheit des Zentralcomputers bzw. seiner Software ist es, daß in einem Abrechnungsmodul auf der Grundlage der Auftragsdaten und/oder der Bearbeitungsdaten, die an die Institutionen weitergeleitet werden und/oder der Rückmeldungsdaten, Rechnungs- und/oder Buchungsdaten generiert werden, die zur Abrechnung sowohl mit den beauftragten Institutionen, als auch für die Buchungsabrechnung mit dem Kunden verwendet werden.

Die im Abrechnungsmodul aufgrund der Auftragsdaten, der Bearbeitungsdaten und der von den beteiligten Institutionen zurückgemeldeten Daten generierten Buchungs- und/oder Rechnungsdaten werden vorzugsweise über standardisierte Schnittstellen in automatischer Weise den beteiligten Institutionen übermittelt. Falls vorhanden, werden die Buchungsdaten automatisch mittels einer standardisierten Schnittstelle, wie einer sogenannten DTA-Schnittstelle, den computerbasierten Buchungssystemen der Kunden übermittelt. Somit kann eine automatische Buchung durchgeführt werden, ohne daß manuell eingegriffen werden muß. Die Verbuchungslogik zur automatischen Erzeugung der Buchungssätze kann dabei kundenspezifisch konfiguriert sein

Bevorzugt werden die Buchungs- bzw. Rechnungsdaten der Kunden und/oder beteiligten Institutionen zu vorgegebenen kundenspezifisch Zeitpunkten generiert und/oder an diese übermittelt. Weiterhin kann vorgesehen sein, daß die Buchungsdaten oder zugehörige Rechnungsdaten nicht nur zu vorbestimmten Zeiten, z. B. im Bezug auf eine erbrachte Leistung bei der Auftragsbearbeitung, sondern auch periodisch an den Kunden weitergeleitet werden.

Im vorstehend genannten Fall der Abholung der Tageseinnahmen eines Händlers H werden beispielsweise Detailinformationen für die zuständige Geschäftsbank GB des Händlers H generiert, welche die Geschäftsbank GB zur Buchung der vom Cash Center abgeholten Tageseinnahmen auf das Konto des Händlers H nutzen kann.

Es kann auch sein, daß es z.B. nach einer Prüfung der vom Kunden abgeholten Tageseinnahmen in der Zentralbank ZB zu Abweichungen kommt, weil in den Tageseinnahmen z.B. Falschgeld enthalten war. Um diese Differenzen bei der Buchung der Tageseinnahmen auf das Konto des Händlers H berücksichtigen zu können, werden dieses Informationen der für die Buchung zuständigen Geschäftsbank GB vorzugsweise entweder vom dem Cash Center CC oder der überprüfenden Zentralbank ZB selbst zugeführt.

### 7. Bearbeitungsüberprüfung:

Der Zentralcomputer wird dabei nach einer weiteren vorteilhaften Idee eine Überwachung der Auftragsbearbeitung durchführen, d.h. zusätzlich zu der vorstehend genannten Überprüfung der Auftragsdaten wird im Überwachungsmodul z. B. automatisch kontrolliert werden, ob die zugeleiteten Bearbeitungsdaten von den betroffenen Institutionen bestätigt und in der erwarteten Zeit die von diesen Institutionen in Durchführung der Bearbeitungsaufträge erzielten Ergebnisse übermittelt bzw. bestätigt worden sind.

Hierzu wird das Überwachungsmodul des Zentralcomputers die Durchführung der Auftragsbearbeitung in Abhängigkeit von vorgegebenen Qualitätsfaktoren automatisch und spezifisch für einen Kunden und/oder die beteiligten Institutionen bewerten. Dies kann beispielsweise so ausgestaltet sein, daß eine pünktliche Auftragsdurchführung der beteiligten Institutionen gemäß der Bearbeitungsdaten ohne Reklamationen zu einer positiven Qualitätsbewertung führt.

Zudem kann eine Prüfung des Vorhandenseins von erforderlichen Rückmeldungen der mit Bearbeitungsdaten versorgten Institutionen erfolgen, die z. B. die Auftragsannahme, als auch die Durchführung bestätigen müssen.

Es sei nun exemplarisch ein konkretes Beispiel beschrieben, wie eine Auftragsbearbeitung z. B. im Rahmen des vorstehend genannten Systems durchgeführt werden kann.

So kann eine Bankfiliale einer Geschäftsbank GB beispielsweise mittels einer standardisierten DFÜ-Schnittstelle der Software des Zentralcomputers der Zentrale Z automatisch Bestelldaten zur Auslieferung von Bargeldbeständen an die Filiale weiterleiten. Die Daten werden durch das Auftragserfassungsmodul erfaßt, durch das Überwachungsmodul auf Konsistenz usw. geprüft, bei positiver Prüfung eine Auftragsbestätigung an den Kunden mittels der DFÜ-Schnittstelle durch das Datenübertragungsmodul zurückübertragen. Auf der Grundlage der Auftragsdaten diesen und gegebenenfalls auch anderer Aufträge werden durch das Berechnungsmodul dann automatisch Bearbeitungsdaten generiert, die zu einer Bestellung der gewünschten Bargeldbestände bei der Zentralbank ZB oder bei einem dem Kunden zugeordneten Cash Center CC dienen und an diese durch das Datenübertragungsmodul übermittelt werden. Gleichzeitig wird auch ein entsprechender Auftrag an ein dem Kunden zugeordnetes Werttransportunternehmen WTU zugeführt, welcher die z.B. bei einem speziellen Cash Center CC bestellten Bargeldbestände, die dort bereits vorkonfektioniert worden sind, in Abhängigkeit von den kundenspezifischen Bearbeitungsdaten abholt und diese zu den gemäß der Bearbeitungsdaten festgesetzten Zeitpunkten der jeweiligen Filiale des Kunden liefert. Zumindest das Werttransportunternehmen WTU und vorzugsweise auch das Cash Center CC werden nach Durchführung ihrer gemäß der Bearbeitungsdaten durchgeführten Aktionen Rückmeldungsdaten per DFÜ-Verbindung oder dergleichen an die Zentrale Z senden, um über die ordnungsgemäße Auftragsdurchführung Bericht zu erstatten. Anschließend oder bereits vorhergehend werden mittels des Abrechnungsmoduls automatisch Abrechnungsdaten für das beteiligte Werttransportunternehmen WTU und das Cash Center CC erstellt und an diese weitergeleitet und Buchungssätze erzeugt, die dem Buchungssystem des Kunden übermittelt werden.

Das erfindungsgemäße System zur Bargeldhandhabung ermöglicht somit eine umfassende automatische Durchführung und Überwachung von Vorgängen zur Bearbeitung von Aufträgen im Bereich der Bargeldhandhabung.

## Patentansprüche

1. System zur Bearbeitung von Aufträgen zur Bargeldhandhabung, wobei eine Zentrale (Z) mittels eines Zentralcomputers über Datenleitungen Daten mit verschiedenen Institutionen austauschen kann, insbesondere mit einer oder mehreren Geschäftsbanken (GB), einer oder mehreren Zentralbanken (ZB) und einem oder mehreren Cash Centern (CC), und wobei der Zentralcomputer in Abhängigkeit von kundenspezifischen Auftragsdaten Bearbeitungsdaten erzeugt, welche an zumindest einen Teil der Institutionen über die Datenleitungen zur Bearbeitung des Kundenauftrags weitergeleitet werden.

2. System nach Anspruch 1, **dadurch gekennzeichnet, daß** der Zentralcomputer zumindest einen Teil oder alle der folgenden Module aufweist: ein Auftragserfassungsmodul für die Erfassung und Speicherung von Auftragsdaten des Kundenauftrags, ein Berechnungsmodul zur Berechnung von Bearbeitungsdaten auf der Grundlage der Auftragsdaten und zur Zuordnung von Bearbeitungsdaten zu zumindest einem Teil der Institutionen, ein Datenübertragungsmodul zur Übertragung von Daten wie Bearbeitungsdaten zu den zugeordneten Institutionen, ein Rückmeldungsdatenerfassungsmodul zur Erfassung von in Bezug auf die Auftragsdaten und/oder Bearbeitungsdaten stehenden Rückmeldungsdaten, die von den Institutionen dem Zentralcomputer übermittelt werden, ein Überwachungsmodul zur Überprüfung der Plausibilität von Auftragsdaten und/oder Bearbeitungsdaten und/oder Rückmeldungsdaten, ein Abrechnungsmodul zur Erzeugung von den Kunden zugeordneten Rechnungsdaten und/oder Buchungsdaten, die auf der Grundlage der Auftragsdaten und/oder Bearbeitungsdaten und/oder Rückmeldungsdaten gewonnen werden.

3. System nach Anspruch 1 oder 2, **dadurch gekennzeichnet, daß** die Institutionen weiterhin ein oder mehrere Werttransportunternehmen (WTU) zum Transport von Bargeldbeständen und/oder ein oder mehrere Serviceunternehmen (SU) zur Wartung von Bargeldbearbeitungsmaschinen (SB) sind.

4. System nach zumindest einem der vorherigen Ansprüche, **dadurch gekennzeichnet, daß** das Berechnungsmodul die Bearbeitungsdaten auf der Grundlage mehrerer verschiedener Auftragsdaten auch unterschiedlicher Kunden erzeugt.

5. System nach zumindest einem der vorherigen Ansprüche, **dadurch gekennzeichnet, daß** dem Auftragserfassungsmodul die Auftragsdaten über Datenleitungen vom Kunden zugeführt werden und/oder das Auftragserfassungsmodul die Auftragsdaten selbst, insbesondere in vorgegebenen Zeitintervallen, erzeugt.

6. System nach zumindest einem der vorherigen Ansprüche, **dadurch gekennzeichnet, daß** die Weiterleitung der Bearbeitungsdaten vom Zentralcomputer zu den Institutionen mittels des Datenübertragungsmoduls wahlweise manuell durch einen Nutzer ausgelöst oder automatisch durch den Zentralcomputer ausgelöst zu vorgegebenen Zeiten erfolgt.

7. System nach zumindest einem der vorherigen Ansprüche, **dadurch gekennzeichnet, daß** alle Institutionen, welche Bearbeitungsdaten erhalten haben, nachfolgend Rückmeldungsdaten an den Zentralcomputer zurückleiten.

8. System nach zumindest einem der vorherigen Ansprüche, **dadurch gekennzeichnet, daß** der Zentralcomputer mittels des Datenübertragungsmoduls den Institutionen nur dann Daten über die Freigabe zur Durchführung des Autrags gemäß der übermittelten oder zu übermittelnden Bearbeitungsdaten zusendet, wenn das Datenerfassungsmodul in Bezug auf die Auftragsdaten und/oder Bearbeitungsdaten stehende Rückmeldungsdaten erhalten hat.

9. System nach zumindest einem der vorherigen Ansprüche, **dadurch gekennzeichnet, daß** das Berechnungsmodul dann, wenn die Institutionen nach Erhalt der Bearbeitungsdaten nicht innerhalb einer vorgegebenen Zeitdauer, die abhängig vom Kunden und/oder den Auftragsdaten variabel gewählt sein kann, zugehörige Rückmeldungsdaten übermitteln, automatisch ein Warnsignal und/oder geänderte Bearbeitungsdaten für die betroffenen Aufträge erzeugt.

10. System nach zumindest einem der vorherigen Ansprüche, **dadurch gekennzeichnet, daß** das Überwachungsmodul automatisch eine Plausibilitätsprüfung aller übermittelten Auftragsdaten, Bearbeitungsdaten und Rückmeldungsdaten durchführt, um die korrekte Auftragsbearbeitung überwachen zu können.

11. System nach zumindest einem der vorherigen Ansprüche, **dadurch gekennzeichnet, daß** es zu allen oder zumindest zu einem Teil der Institutionen verschiedene Arten von Datenleitungen gibt, über die wahlweise Daten mit dem Zentralcomputer ausgetauscht werden können.

12. System nach zumindest einem der vorherigen Ansprüche, **dadurch gekennzeichnet, daß** es für eine Art von Datenleitungen eine standardisierte Schnittstelle, wie z.B. eine Internet, Email, DFÜ, SMS oder Fax basierte Schnittstelle gibt, über die alle mit dem Zentralcomputer verbundene Institutionen Daten austauschen können.

13. System nach zumindest einem der vorherigen Ansprüche, **dadurch gekennzeichnet, daß** das Abrechnungsmodul eine Verbuchung der Aufträge auf zumindest ein Konto des Kunden durchführt.

14. System nach zumindest einem der vorherigen Ansprüche, **dadurch gekennzeichnet, daß** das Berechnungsmodul die Bearbeitungsdaten in Abhängigkeit von Daten über die Zuständigkeit bestimmter Institutionen für bestimmte Kunden und/oder die geographische Lage bestimmter Kunden und/oder Institutionen bestimmt.

15. System nach zumindest einem der vorherigen Ansprüche, **dadurch gekennzeichnet, daß** das Berechnungsmodul die Bearbeitungsdaten in Abhängigkeit von Daten von Bargeldbearbeitungsmaschinen (SB) bestimmt, welche von den Institutionen zur Auftragsbearbeitung benutzt werden, wobei die Daten der Bargeldbearbeitungsmaschinen (SB) vorzugsweise zu vorgegebenen Zeiten dem Zentralcomputer übermittelt werden.

16. Datenträger mit einer Software, die zur Realisierung des Systems nach einem der vorherigen Ansprüche ausgestaltet ist.
